# EUROPÄISCHE PATENTSCHRIFT

(11) **EP 2 516 528 B1**
(45) Veröffentlichungstag und Bekanntmachung des Hinweises auf die Patenterteilung: **04.06.2014**
(21) Anmeldenummer: 10798552.5
(22) Anmeldetag: 20.12.2010
(51) Int. Cl.: C08K 3/22, C08K 5/5313, C08L 31/04

(54) **FLAMMGESCHÜTZTE POLYMERZUSAMMENSETZUNGEN**
FLAME RETARDANT POLYMER COMPOSITIONS
COMPOSITIONS DE POLYMÈRES RETARDATRICES DE FLAMME

(30) Priorität: 21.12.2009 EP 09180183
(43) Veröffentlichungstag der Anmeldung: 31.10.2012
(73) Patentinhaber: LANXESS Deutschland GmbH, 50569 Köln (DE)
(72) Erfinder: BERGMANN, Gerd, 22523 Hamburg (DE); LA ROSA, Manuel, 50674 Köln (DE); ROOS, Andreas, 40547 Düsseldorf (DE)
(86) Internationale Anmeldenummer: PCT/EP2010/070290
(87) Internationale Veröffentlichungsnummer: WO 2011/076760

(56) Entgegenhaltungen:
- EP-A- 1 024 168
- WO-A-98/39381
- WO-A-2004/022640

## Beschreibung

Die vorliegende Erfindung betrifft eine flammgeschützte, aus einem oder mehreren α-Olefin-Vinylacetat-Copolymeren mit einem Vinylacetatgehalt von 40 bis 90 Gew.-%, bezogen auf das Gesamtgewicht des α-Olefin-Vinylacetat-Copolymeren bestehende Polymerzusammensetzung, deren Verwendung und eine Flammschutzkombination zur Aufrüstung von Kunststoffen und Kautschuken.

Flammgeschützte Polymerzusammensetzungen werden beispielsweise in Kabelanwendungen (Kabelmantel und Kabelisolation) sowie Fußbodenbelägen eingesetzt. Derartige Polymerzusammensetzungen sollen einen ausreichenden, den gesetzlichen Normen entsprechenden Flammschutz und zudem hervorragende Verarbeitungseigenschaften aufweisen.

Seit langem ist es bekannt, Polymersysteme mit anorganischen Flammschutzmitteln, halogenierten Flammschutzmitteln, Organophosphor-Flammschutzmitteln oder stickstoffbasierten Flammschutzmitteln auszurüsten.

Als mineralische Flammschutzmittel sind Metallhydroxide, insbesondere Aluminiutnhydroxide (ATH) und Magnesiumhydroxide (MDH) zu nennen, die in Polymeren als flammhemmende Füllstoffe eingesetzt werden. Metallhydroxide werden dabei allein oder in Kombination miteinander und gegebenenfalls in Kombination mit weiteren Flammschutzadditiven eingesetzt.

Die Flammschutzwirkung beruht dabei im Wesentlichen auf einer endothermen Zersetzung der Kristalle, der Freisetzung von Wasser in Form von Wasserdampf bei gleichzeitiger Verdünnung der Konzentration brennbarer Gase in der Umgebung des angegriffenen Kunststoffs und der Bildung eines mehr oder weniger festen Oxidrückstands. Der Oxidrückstand selbst hat eine hohe innere Oberfläche und kann somit Russpartikel bzw. Vorprodukte des Rußes (polycyclische aromatische Kohlenwasserstoffe, PAK), adsorbieren. Diese sog. Ascheschicht fungiert als mechanische Stabilisierung des brennenden Polymers, so dass beispielsweise brennendes Abtropfen des Polymers reduziert oder ganz vermieden wird. Ferner wirkt die verkrustete Ascheschicht an der Oberfläche des brennenden Polymers als eine Art "Schutzbarriere" für die darunter liegenden Polymerschichten, wodurch ein schnelles Weilerbrennen vermieden werden kann.

Besonders bewährt hat sich der Einsatz von Metallhydroxiden in α-Olefin-Vinylacetat-Copolymeren.

Nachteilig sind jedoch die hohen Zugabemengen von Metallhydroxiden in Kunststofftnischungen, um dem Kunststoff einen ausreichenden Flammschutz zu gewährleisten. Dadurch werden die physikalische Eigenschaften (mechanische und elektrische Kenndaten) des Kunststoffs beeinträchtigt.

Weiterhin haben sich Salze von Phosphinsäuren (Phosphinate) als wirksame flammhemmende Zusätze für Polymersysteme erwiesen. Calcium- und Aluminiumphosphinate sind in Polyestern oder Polyamiden als besonders effektiv beschrieben worden und beeinträchtigen die Materialeigenschaften der Polymermassen weniger als z. B. Alkalimetallsalze.

Auch wurden synergistischen Kombinationen von Phosphinaten mit bestimmten stickstoffhaltigen Verbindungen gefunden, die in vielen Polymeren als Flammschutzmittel effektiver wirken, als die Phosphinate alleine. Bekannt sind beispielsweise Melamin und Melaminverbindungen als wirksame Synergisten, wie etwa Melamincyanurate und Melaminphosphat.

Aufgabe der vorliegenden Erfindung ist daher, eine Polymerzusammensetzung bereitzustellen, bei der der Füllgrad des Metallhydroxids reduziert wird, wobei die Flammschutzwirkung zumindest gleich bleibend oder verbessert wird, jedoch die mechanischen Eigenschaften des Polymers verbessert und vor Allem die Härte verringert wird.

Zur Lösung dieser Aufgabe schlägt die vorliegende Erfindung eine flammgeschützte Polymerzusammensetzung der eingangs genannten Art vor, welche aus einer oder mehreren α-Olefin-Vinylacetat-Copolymeren mit einem Vinylacetatgehalt von 40 bis 90 Gew.-%, bezogen auf das Gesamtgewicht des α-Olefin-Vinylacetat-Copolymeren und auf eine synergistische Flammschutzmittel-Kombination, enthaltend als Komponente A ein Phosphinsäuresalz der Formel (I) 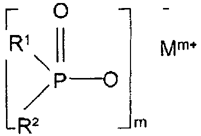 worin
- R¹, R²: C₁-C₆-Alkyl, vorzugsweise C₁-C₄-Alkyl, linear oder verzweigt;
- M: Calcium-, Aluminium-, Zink-Ionen;
- m: 2 oder 3
bedeuten
und als Komponente B ein Metallhydroxid, bevorzugt Aluminiumhydroxid (ATH).
Komponente A wird hier auch als Phosphinate bezeichnet.

Überraschenderweise wurde festgestellt, dass durch die Zugabe von Metallhydroxiden und Phosphinaten der Flammschutz signifikant erhöht wird bei gleichzeitiger Verbesserung der mechanischen Eigenschaften bzw. der Flexibilität des Materials.

Für die Beurteilung des Flammschutzes werden verschiedene Parameter herangezogen.

Ein indikativer Wert zur Beurteilung des Flammschutzes und insbesondere der Entzündbarkeit ist der Limiting Oxygen Index (LOI) nach ISO 4589. Er beschreibt die Minimalkonzentration an Sauerstoff in einer Sauerstoffmischung, die gerade in der Lage ist, die Verbrennung eines vertikal orientierten Prüfkörpers zu unterstützen. Bei niedrigerer Sauerstoffkonzentration erlischt die Flamme. Hohe LOI-Werte bedeuten daher hoher Flammschutz bzw. niedrige Entzündbarkeit.

Weitere für den Flammschutz relevante Kennwerte können mit dem Cone Calorimeter bestimmt werden, wie etwa:
- die "Peak-Heat-Release-Rate" in KW/m² (PHRR); dies ist die maximale Leistungsabgabe pro Flächeneinheit, die im Cone-Calorimeter bei der Verbrennung der Probe gemessen wurde. Je geringer die PHRR, desto besser ist die Probe flammgeschützt.
- die "Time to Ignition" (TTI); dies ist der Zeitpunkt, bei der die Probe durch die Wärmeausstrahlung im Cone-Calorimeter zu brennen beginnt. Je höher der TTI-Wert, desto besser ist die Probe flammgeschützt.

Ein weiteres Verfahren zur Beurteilung und Klassifizierung der Brennbarkeit von Kunststoffen ist die Vorschrift UL 94. Die UL94-Klassifizierung wird an 3.2 mm dicken Proben durchgeführt. Nach der UL 94-V-Norm erfolgt eine Einstufung in nicht klassifiziert (NC), V2 (besser), V1 (noch besser), V0 (Höchsteinstufung).

Vorzugsweise handelt es sich bei der Komponente A um ein Aluminiumphosphinat.

Bevorzugt beträgt die Gesamtmenge an synergistischen Flammschutzmittelkombinationen zwischen 110 und 280 phr, besonders bevorzugt zwischen 80 und 190 phr.

Die erfindungsgemäße Polymerzusammensetzung weist bevorzugt 100 bis 190 phr Komponente B und 10 bis 90 phr Komponente A auf, besonders bevorzugt 130 - 160 phr Komponente B und 20 - 40 phr Komponente A.

Vorzugsweise weist die erfindungsgemäße Polymerzusammensetzung 160 phr ATH und 30 phr Aluminiumphosphinat auf.

Hierbei bedeutet "phr" parts per hundred rubber.

Die eingesetzten α-Olefin-Vinylacetat-Copolymere zeichnen sich durch hohe Vinylacetat-Gehalte von ≥ 40 Gew.-%, bezogen auf das Gesamtgewicht des α-Olefin-Vinylacetat-Copolymeren aus. Bevorzugt beträgt der Vinylacetat-Gehalt der erfindungsgemäß eingesetzten α-Olefin-Vinylacetat-Copolymere 50 Gew.-% bis 80 Gew.-%, bezogen auf das Gesamtgewicht der α-Olefin-Vinylacetat-Copolymere.

Das eingesetzte α-Olefin-Vinylacetat-Copolymer kann neben den auf dem α-Olefin und Vinylacetat basierenden Monomereinheiten ein oder mehrere weitere Comonomereinheiten aufweisen (z.B. Terpolymere), z.B. basierend auf Vinylestern und/oder (Meth)acrylaten. Die weiteren Comonomereinheiten sind - sofern weitere Comonomereinheiten in dem α-Olefin-Vinylacetat-Copolymer vorliegen, in einem Anteil von bis zu 10 Gew.-%, bezogen auf das Gesamtgewicht des α-Olefin-Vinylacetat-Copolymeren vorhanden, wobei sich der Anteil der auf dem α-Olefin basierenden Monomereinheiten entsprechend verringert. Somit können z.B. α-Olefin-Vinylacetat-Copolymere eingesetzt werden, die aus 40 Gew.-% bis 90 Gew.-% Vinylacetat, 10 Gew.-% bis 60 Gew.-% α-Olefin und 0 bis 10 Gew.-% mindestens eines weiteren Comonomeren aufgebaut sind, wobei die Gesamtmenge an Vinylacetat, α-Olefin und dem weiteren Comonomeren 100 Gew.-% beträgt.

Als α-Olefine können in den eingesetzten α-Olefin-Vinylacetat-Copolymeren alle bekannten α-Olefine eingesetzt werden. Bevorzugt ist das α-Olefin ausgewählt aus Ethen, Propen, Buten, insbesondere n-Buten und i-Buten, Penten, Hexen, insbesondere 1-Hexen, Hepten und Octen, insbesondere 1-Octen.

Es können auch höhere Homologe der genannten α-Olefine als α-Olefine in den α-Olefin-Vinylacetat-Copolymeren eingesetzt werden. Die α-Olefine können des Weiteren Substituenten tragen, insbesondere C₁-C₅-Alkylreste. Bevorzugt tragen die α-Olefine jedoch keine weiteren Substituenten. Des Weiteren ist es möglich, in den α-Olefin-Vinylacetat-Copolymeren Mischungen zweier oder mehrerer verschiedener α-Olefine einzusetzen. Bevorzugt ist es jedoch, keine Mischungen verschiedener α-Olefine einzusetzen. Bevorzugte α-Olefine sind Ethen und Propen, wobei Ethen besonders bevorzugt als α-Olefin in den α-Olefin-Vinylacetet-Copolymeren eingesetzt wird.

Somit handelt es sich bei dem bevorzugt eingesetzten α-Olefin-Vinylacetat-Copolymer um ein Ethylen-Vinylacetat-Copolymer.

Besonders bevorzugte Ethylen-Vinylacetat-Copolymere weisen einen Vinylacetat-Gehalt von 50 Gew.-% bis 80 Gew.-%. auf.

Üblicherweise werden die bevorzugt eingesetzten Ethylen-Vinylacetat-Copolymere mit hohen Vinylacetat-Gehalten als EVM-Copolymere bezeichnet, wobei das "M" in der Bezeichnung das gesättigte Rückgrat der Methylen-Hauptkette des EVMs andeutet.

Die verwendeten α-Olefin-Vinylacetat-Copolymere, bevorzugt Ethylen-Vinylacetat-Copolymere, weisen im Allgemeinen MFI-Werte (g/10 min), gemessen nach ISO 1133 bei 190 °C und einer Last von 21,1 N, von 1 bis 40, bevorzugt 1 bis 35 auf.

Die Mooney-Viskositäten gemäß DIN 53 523 ML 1+4 bei 100°C betragen im Allgemeinen 3 bis 80, bevorzugt 20 bis 65 Mooney-Einheiten.

Das zahlenmittlere durchschnittliche Molekulargewicht (Mw), bestimmt mittels GPC, beträgt im Allgemeinen von 5000 g/mol bis 800000 kg/mol, bevorzugt 100000 g/mol bis 400000 g/mol.

Besonders bevorzugt werden in der erfindungsgemäßen flammgeschützten Polymerzusammensetzung Ethylen-Vinylacetat-Copolymere eingesetzt, die zum Beispiel unter den Handelsnamen Levapren^{®} oder Levamelt^{®} der Lanxess Deutschland GmbH kommerziell erhältlich sind.

Vorzugsweise weist die erfindungsgemäße flammgeschützte Polymerzusammensetzung einen LOT von mindestens 30 % und eine Härte von maximal 90 Shore A auf.

Die erfindungsgemäße flammgeschützte Polymerzusammensetzung kann in Kunststoffen und Kautschuken, thermoplastischen Elastomeren oder thermoplastischen Vulkanisaten verwendet werden.

Eine weitere Erfindung ist die Verwendung der erfindungsgemäßen flammgeschützten Polymerzusammensetzung für die Herstellung von Kabeln, Kunststoff-Formmassen, elastischen Formmassen, Fußbodenbelägen (besonders in öffentlichen Verkehrsmitteln bzw. Gebäuden), elektrischen, beschichteten Leitern und Klebstoffen.

Es ist daher vorstellbar, die erfindungsgemäße flammgeschützten Polymerzusammensetzung auch in Blends einzusetzen. Hierbei kommen beispielsweise folgende Polymere in Frage: HNBR, EPDM, EVA, HDPE, LDPE, Polyamid und/oder Copolyester.

Beispielsweise müssen Kabelmäntel für bestimmte Bereiche ölbeständig sein, da eingequollenes Öl spätestens im Brandfall die Funktion beeinträchtigt und zusätzlich die Rauchgasdichte erhöht. Des Weiteren müssen die Kabel auch bei Tieftemperaturen bis unter Minus 40 °C flexibel bleiben und gute elektrische Tsolationseigenschaften zeigen, damit sie auch bei dünnen Wandstärken zuverlässig arbeiten.

Es ist ebenso vorstellbar, Maleinsäureanhydrid gegrafte EVM/EVA im Blend zu verwenden. Der Vinylacetatgehalt für das gegrafte EVM/EVA beträgt 18 bis 90 Gew.-% bezogen auf das Gesamtgewicht des α-Olefin-Vinylacetat-Copolymer, bevorzugt 32 bis 80 Gew.-% und ganz besonders bevorzugt 40 bis 70 Gew.-%. Der Gehalt der MAHg-EVM/EVA beträgt vorzugsweise 5 bis 50 phr, bevorzugt 10 bis 40 phr und besonders bevorzugt 10 bis 20 phr.

Eine weitere Erfindung ist auch eine Flammschutzmittelkombination zur Herstellung flammgeschützter Polymerzusammensetzung aus einem oder mehreren α-Olefin-Vinylacetat-Copolymeren mit einem Vinylacetat-Gehalt von 40 bis 90 Gew.-%, bezogen auf das Gesamtgewicht des α-Olefin-Vinylacetat-Copolymeren, dadurch gekennzeichnet, dass sie als Komponente A ein Aluminiumphosphinat und als Komponente B ein Metallhydroxid, bevorzugt Aluminiumhydroxid (ATH), enthält.

Bevorzugt ist ein Vinylacetatgehalt von 50 - 80 Gew.-% bezogen auf das Gesamtgewicht des α-Olefin-Vinylacetat-Copolymeren.

Es hat sich herausgestellt, dass diese Kombination eine hervorragende Flammschutzwirkung aufweist, welche für das besagte α-Olefin-Vinylacetat-Copolymer im Hinblick auf eine gleichzeitig niedrige Härte besonders gut geeignet ist.

Des Weiteren weist die erfindungsgemäße flammgeschützte Polymerzusammensetzung geringere Konzentrationen toxischer Rauchgase im Brandfall gemäß EN ISO 5659-2 auf. Insbesondere weist sie beispielsweise kein HCl-Gas auf, da das α-Olefin-Vinylacetat-Copolymer halogenfrei ist.

Die daraus hergestellten Kabel, Kabelmäntel, Kunststoff-Formmassen, elastische Formmassen, Fußbodenbeläge, elektrische, beschichtete Leiter bleiben auch bei Tieftemperaturen bis unter -40°C flexibel.

Die erfindungsgemäße Flammschutzmittelkombination weist bevorzugt 100 bis 190 phr Komponente B und 10 bis 90 phr Aluminiumphosphinat, besonders bevorzugt 130 - 160 phr Komponente B und 20 - 40 phr Aluminiumphosphinat auf.

Vorzugsweise beträgt die erfindungsgemäße Flammschutzmittelkombination 160 phr ATH und 30 phr Aluminiumphosphinat auf.

Die erfindungsgemäße Flammschutzmittelkombination ist zur Aufrüstung von Kunststoffen und Kautschuken, thermoplastischen Elastomeren bzw. thermoplastischen Vulkanisaten geeignet.

Bevorzugt wird sie in Ethylen-Vinylacetat-Copolymere eingesetzt, die zum Beispiel unter den Handelsnamen Levapren^{®} oder Levamelt^{®} der Lanxess Deutschland GmbH kommerziell erhältlich sind, oder in Blends mit HNBR, EPDM, EVA, HDPE, LDPE, Polyamiden und/oder Copolyestern.

Die erfindungsgemäße Flammschutzmittelkombination ist halogenfrei und kann auf Grund der geringen Viskosität und guten Verträglichkeit mit polaren Füllstoffen große Mengen anorganischer Flammschutzmittel wie Aluminiumhydroxid aufnehmen. Wenn die erfindungsgemäße Flammschutzmittelkombination enthaltenen Compounds verbrennen, entstehen lediglich Rauchgase geringer Dichte. HCl-Gas beispielsweise, das beim Brand halogenhaltigen Compounds entsteht, können reine Ethylen-Vinylacetat-Copolymere auf Grund ihrer chemischen Zusammensetzung erst gar nicht abgeben.
Diese Vorteile zeigen sich insbesondere im Bahnverkehr oder in Gebäuden; dort sollen die Personen die vom Brand betroffenen Bereiche ohne fremde Hilfe verlassen können; dazu gehört sicherlich auch, dass die Fluchtwege lange sichtbar bleiben.

Vorzugsweise beträgt die Gesamtmenge an synergistischen Flammschutzmittelkombinationen zwischen 110 und 280 phr, besonders bevorzugt zwischen 80 und 190 phr für die oben genannten Verwendungen.

Nachstehend wird anhand von Beispielen die Erfindung näher erläutert:
Fig. 1: Grafische Darstellung von LOI- Werte von α-Olefin-Vinylacetat-Copolymeren mit und ohne ATH

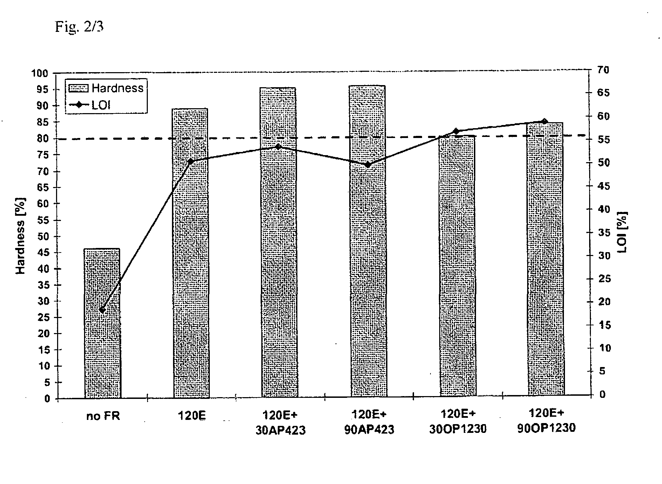

Fig. 2: Grafische Darstellung zu Tab. 1, Härte und LOI
Fig. 3: Grafische Darstellung zu Tab. 2, Reißdehnung und LOI

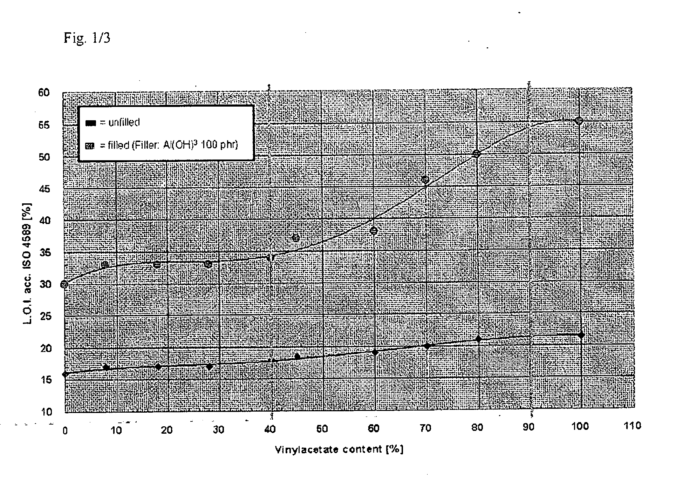

Fig. 1 zeigt einen Anstieg des LOI Werts bei der Verwendung von ATH, insbesondere sobald der Vinylacetatgehalt (VA) des α-Olefin-Vinylacetat-Copolymeren 40 Gew.-% überschreitet. Bei Erhöhung von 0 auf 40 Gew.-% VA steigt der LOI um ca. 15% (LOI: 30% => LOI: 35%). Bei Erhöhung von 40 auf 80 Gew.-% VA steigt der LOI um ca. 40% (LOI: 35% => LOI: 50%).

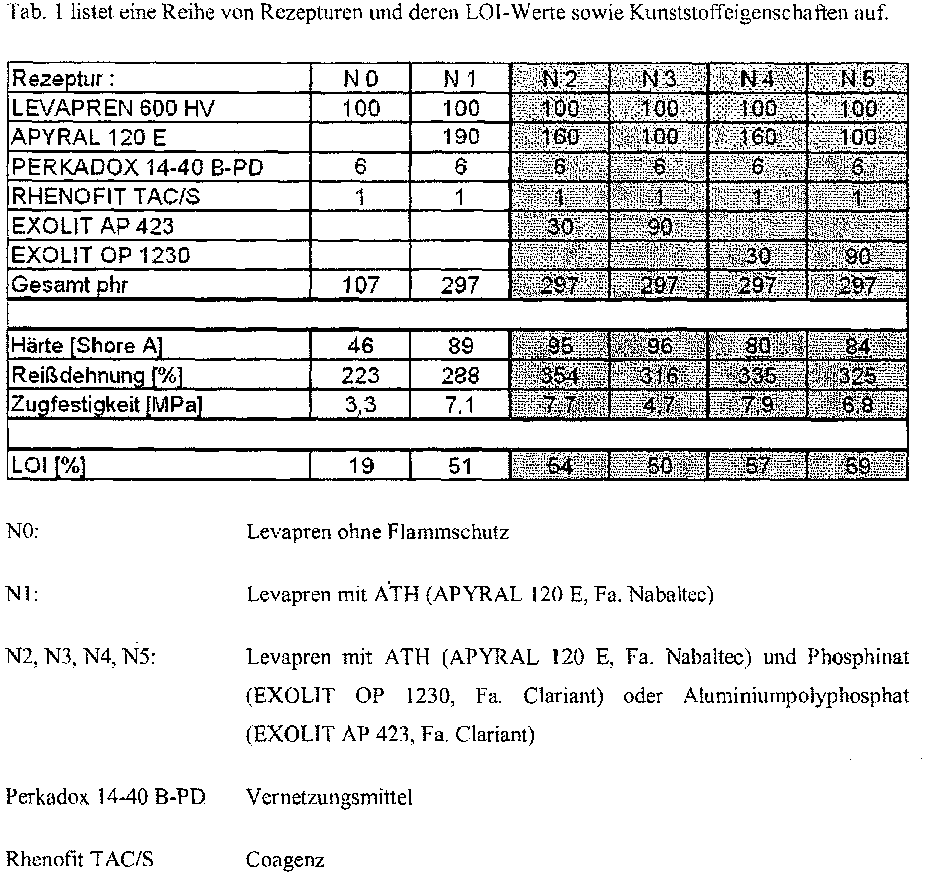

Gut zu erkennen ist der Sprung im LOI bei Einsatz von ATH (19% auf 51 %) und ein weiterer bei Verwendung von EXOLIT OP 1230 (51% auf 59%). Überraschenderweise zeigt nur das EXOLIT OP 1230 Vorteile in Bezug auf Flammschutz und mechanische Eigenschaften. Besonders hervorzuheben ist die Mischung N4. Mit der Kombination von 160phr ATH und 30phr EXOLIT OP 1230 kann sowohl ausgezeichnete Werte im LOI als auch in Reißdehnung und Zugfestigkeit erreicht werden. Die gleichzeitig niedrigste Härte von 80 Shore A stellt einen einzigartigen Vorteil bei der Rezepturgestaltung dar.

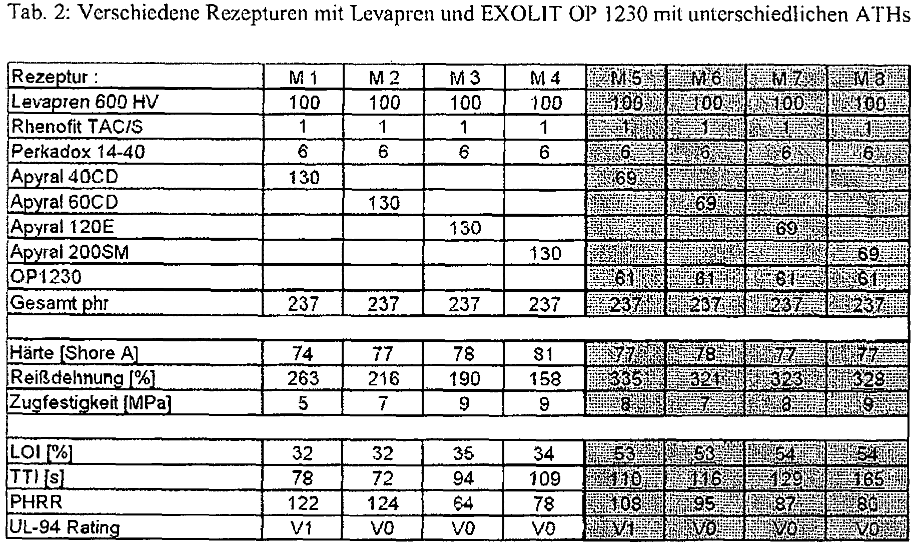

OP1230 ist eine verkürzte Schreibweise von EXOLIT OP 1230.

Tabelle 2 zeigt deutlich einen überraschenden Effekt des EXOLIT OP 1230 in Kombination mit verschiedenen ATHs, dabei beträgt die Füllstoffkonzentration an Flammschutzmittelkomponenten (ATH oder Kombination aus ATH und EXOLIT OP 1230) 130 phr.

Signifikant höhere LOI Werte bei Einsatz von OP 1230 ist ersichtlich. Des Weiteren wird die TTI jeweils um über 30s verlängert. Die PHRR bleibt vergleichbar oder verringert sich, was ebenfalls positiv ist. Von besonderem Vorteil sind außerdem die deutlich höheren Werte in der Reißdehnung für OP1230 Mischungen im Vergleich zu ATH alleine. Bei vergleichbarer Härte und Zugfestigkeit führt dies zu erhöhter Flexibilität in den entsprechenden Anwendungen. Außer für die Rezeptur mit Apyral 40CD wird immer das beste UL Rating von VO erreicht.

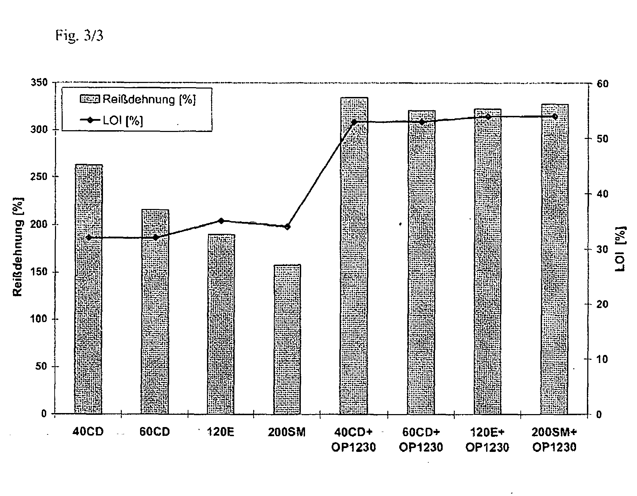

Fig. 3 zeigt den überraschenden Sprung in LOI und Reißdehnung bei Verwendung von ATH und OP1230.

## Patentansprüche

1. Flammgeschützte Polymerzusammensetzung erhältlich
- aus einem oder mehreren α-Olefin-Vinylacetat-Copolymeren mit einem Vinylacetatgehalt von 40 bis 90 Gew.-%, bezogen auf das Gesamtgewicht des α-Olefin-Vinylacetat-Copolymeren und
- aus einer synergistischen Flammschutzmittelkombination, enthalten als Komponente A ein Phosphinsäuresalz der Formel (I) 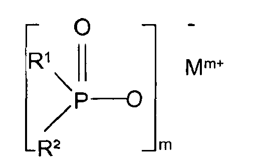 worin
R¹, R² C₁-C₆-Alkyl, vorzugsweise C₁-C₄-Alkyl, linear oder verzweigt;
M Calcium-, Aluminium-, Zink-Ionen;
m 2 oder 3
bedeuten
und als Komponente B ein Metallhydroxid.

2. Flammgeschützte Polymerzusammensetzung nach Anspruch 1, **dadurch gekennzeichnet, dass** Komponente A ein Aluminiumphosphinat ist.

3. Flammgeschützte Polymerzusammensetzung nach Anspruch 1, **dadurch gekennzeichnet, dass** Komponente B ein Aluminiumhydroxid (ATH) ist.

4. Flammgeschützte Polymerzusammensetzung nach Anspruch 1, **dadurch gekennzeichnet, dass** die Gesamtmenge an synergistischer Flammschutzmittelkombination zwischen 110 phr und 280 phr, bevorzugt zwischen 80 und 190 phr, beträgt.

5. Flammgeschützte Polymerzusammensetzung nach Anspruch 4, **dadurch gekennzeichnet, dass** sie 100 bis 190 phr Komponente B und 10 bis 90 phr Komponente A, bevorzugt 130 - 160 phr Komponente B und 20 - 40 phr Komponente A aufweist.

6. Flammgeschützte Polymerzusammensetzung nach Anspruch 5, **dadurch gekennzeichnet, dass** sie 160 phr ATH und 30 phr Aluminiumphosphinat aufweist.

7. Flammgeschützte Polymerzusammensetzung nach Anspruch 1, **dadurch gekennzeichnet, dass** sie einen LOI von mindestens 35 % und gleichzeitig eine Härte von maximal 90 Shore A aufweist.

8. Verwendung der flammgeschützten Polymerzusammensetzung nach einem der vorstehenden Ansprüche zur Herstellung von Kabeln, Kunststoff-Formmassen, elastischen Formmassen, elektrischen beschichteten Leitern, Klebstoffen, Fußbodenbelägen.

## Claims

1. Flameproofed polymer composition obtainable
- from one or more α-olefin/vinyl acetate copolymers having a vinyl acetate content of 40 to 90% by weight, based on the total weight of the α-olefin/vinyl acetate copolymer and
- from a synergistic flameproofing combination containing, as component A, a phosphinic acid salt of the formula (I) 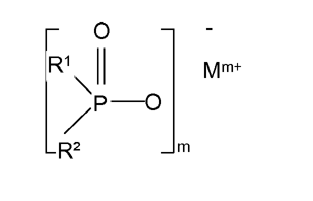 in which
R¹, R² denotes C₁-C₆-alkyl, preferably C₁-C₄-alkyl, linear or branched;
M denotes calcium, aluminium or zinc ions;
m denotes 2 or 3,
and, as component B, a metal hydroxide.

2. Flameproofed polymer composition according to Claim 1, **characterized in that** component A is an aluminium phosphinate.

3. Flameproofed polymer composition according to Claim 1, **characterized in that** component B is an aluminium hydroxide (ATH).

4. Flameproofed polymer composition according to Claim 1, **characterized in that** the total amount of synergistic flameproofing combination is between 110 phr and 280 phr, preferably between 80 and 190 phr.

5. Flameproofed polymer composition according to Claim 4, **characterized in that** it has 100 to 190 phr of component B and 10 to 90 phr of component A, preferably 130 - 160 phr of component B and 20 - 40 phr of component A.

6. Flameproofed polymer composition according to Claim 5, **characterized in that** it has 160 phr of ATH and 30 phr of aluminium phosphinate.

7. Flameproofed polymer composition according to Claim 1, **characterized in that** it has an LOI of at least 35% and at the same time a hardness of not more than 90 Shore A.

8. Use of the flameproofed polymer composition according to any of the preceding claims in the production of cables, plastic moulding materials, resilient moulding materials, electrical coated conductors, adhesives, floor coverings.

## Revendications

1. Composition de polymères ignifugée, pouvant être obtenue
- à partir d'un ou de plusieurs copolymères d'α-oléfine-acétate de vinyle présentant une teneur en acétate de vinyle de 40 à 90% en poids, par rapport au poids total des copolymères d'α-oléfine-acétate de vinyle et
- à partir d'une combinaison synergique d'agents ignifuges, contenant, comme composant A, un sel d'acide phosphinique de formule (I) 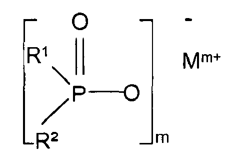 où
R¹, R² signifient C₁-C₆-alkyle, de préférence C₁-C₄-alkyle, linéaire ou ramifié ;
M signifie des ions de calcium, d'aluminium, de zinc ;
m vaut 2 ou 3
et, comme composant B, un hydroxyde de métal.

2. Composition de polymères ignifugée selon la revendication 1, **caractérisée en ce que** le composant A est un phosphinate d'aluminium.

3. Composition de polymères ignifugée selon la revendication 1, **caractérisée en ce que** le composant B est un hydroxyde d'aluminium (ATH).

4. Composition de polymères ignifugée selon la revendication 1, **caractérisée en ce que** la quantité totale de combinaison synergique d'agents ignifuges se situe entre 110 phr et 280 phr, de préférence entre 80 et 190 phr.

5. Composition de polymères ignifugée selon la revendication 4, **caractérisée en ce qu'**elle contient 100 à 190 phr de composant B et 10 à 90 phr de composant A, de préférence 130-160 phr de composant B et 20-40 phr de composant A.

6. Composition de polymères ignifugée selon la revendication 5, **caractérisée en ce qu'**elle présente 160 phr d'ATH et 30 phr de phosphinate d'aluminium.

7. Composition de polymères ignifugée selon la revendication 1, **caractérisée en ce qu'**elle présente un ILO (indice limite d'oxygène) d'au moins 35% et simultanément une dureté d'au maximum 90 Shore A.

8. Utilisation de la composition de polymères ignifugée selon l'une quelconque des revendications précédentes pour la fabrication de câbles, de masses de moulage en matériau synthétique, de masses de moulage élastiques, de conducteurs électriques revêtus, d'adhésifs, de revêtements de sol.
